(19) **Europäisches Patentamt**

**European Patent Office**

**Office européen des brevets**

(11) **EP 0 762 310 B1**

(12) **FASCICULE DE BREVET EUROPEEN**

(45) Date de publication et mention
de la délivrance du brevet:
**03.11.2004 Bulletin 2004/45**

(51) Int Cl.⁷: **G06K 7/10**, G06K 7/08

(21) Numéro de dépôt: **96202413.9**

(22) Date de dépôt: **30.08.1996**

(54) **Système d'échange de données comportant une pluralité de porteurs de données**

Datenauswechselsystem mit einer Vielzahl von Datenträgern

Data exchange system comprising a plurality of data carriers

(84) Etats contractants désignés:
**DE FR GB IT**

(30) Priorité: **06.09.1995 FR 9510444**

(43) Date de publication de la demande:
**12.03.1997 Bulletin 1997/11**

(73) Titulaire: **Koninklijke Philips Electronics N.V.**
**5621 BA Eindhoven (NL)**

(72) Inventeurs:
• **Deville, Yannick**
**75008 Paris (FR)**

• **Andry, Laurence**
**75008 Paris (FR)**

(74) Mandataire: **Landousy, Christian et al**
**Société Civile SPID,**
**156, Boulevard Haussmann**
**75008 Paris (FR)**

(56) Documents cités:
**EP-A- 0 161 779**          **EP-A- 0 598 624**
**US-A- 5 349 355**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

L'invention concerne un système d'échange de données comprenant une station de base et au moins un porteur de données couplés l'un à l'autre à travers des liaisons sans fil pour échanger des données, la station comprenant des moyens d'émission et des moyens de réception pour respectivement interroger au moins un porteur de données et pour recevoir, en réponse, un signal d'identification émis par le porteur de données interrogé, le porteur de données comportant des moyens d'émission/réception. L'invention concerne également une station de base.

Des systèmes de ce genre sont utilisés, par exemple, dans le contrôle de personnes pour accéder à des locaux, pour l'identification de véhicules, pour l'identification de marchandises, ou plus généralement pour identifier tout badge ou autre dispositif portatif servant à reconnaître celui qui le porte.

D'une manière générale, le système comprend une station de base couplée au porteur de données, par exemple un badge. Ce dernier comporte une mémoire, éventuellement programmable, dans laquelle on stocke un contenu, notamment un identifieur, permettant d'identifier la personne, l'animal ou l'objet portant le badge. En exploitation, le badge est interrogé par la station de base en envoyant un signal d'interrogation. Le badge renvoie en réponse un signal retour qui contient l'identifieur contenu dans le badge. La station de base démodule et décode ce signal retour, et, si le badge est reconnu et accepté, la station de base valide cette reconnaissance et effectue les actions appropriées.

Mais, souvent, ces systèmes peuvent être mis en défaut lorsque deux badges ou plus doivent simultanément être reconnus. En effet, il peut être difficile à une station de base de décoder des signaux arrivant simultanément en provenance de deux badges. Néanmoins, certains systèmes résolvent cette difficulté en établissant des protocoles d'échanges basés sur des suites d'interrogations et de réponses. Mais ceci complique les moyens matériels mis en oeuvre et allonge considérablement la durée du traitement. Ainsi le document GB 2 157 132 A décrit un système d'identification qui comprend une station interrogatrice pouvant opérer simultanément avec une pluralité de badges à identifier. Ce système souffre des inconvénients précités. En effet, un tel protocole nécessite que le badge soit muni de moyens spécifiques pour établir ce protocole, ce qui complique beaucoup la structure du badge et augmente son coût de fabrication. A ceci s'ajoutent des sources d'erreurs lorsque les conditions de transmission sont telles que les signaux échangés sont noyés dans du bruit.

Le fascicule de brevet US 5,349,355 divulgue un système d'identification comprenant une station interrogatrice pouvant opérer simultanément avec une pluralité de badges à identifier. Le principe mis en oeuvre dans ce document est une allocation temporelle de créneaux d'émission des signaux d'identification par la pluralité de badges. En effet, la station interrogatrice émet un signal d'interrogation qu'elle répète séquentiellement à différentes fréquences de modulation. Lorsqu'un badge reconnaît une fréquence de modulation particulière de la station interrogatrice, il répond en émettant un signal d'identification à une fréquence de code particulière pendant un créneau d'émission particulier. Un inconvénient de ce système est qu'il nécessite que les badges soient munis de moyens spécifiques complexes pour identifier la fréquence de modulation du signal d'interrogation et de repérer le créneau d'émission de son signal d'identification. Un autre inconvénient de ce système est d'introduire un délai dans le processus d'identification d'un badge, puisque le badge doit attendre un créneau temporel particulier pour émettre son signal d'identification.

Le but de l'invention est donc de proposer un système d'échange de données permettant d'identifier rapidement et simultanément une pluralité de porteurs de données, sans compliquer la structure du porteur de données, en évitant tout protocole d'échange bien que les badges répondent simultanément, le système ayant un fonctionnement plus fiable, même en présence d'un bruit ambiant élevé.

Ce but est atteint avec un système et une station de base dans lequels, pour établir simultanément plusieurs liaisons sans fil entre la station de base et plusieurs porteurs de données, les moyens de réception de la station comportent un dispositif de séparation de sources pour traiter des signaux de mélanges dépendant de mélanges des signaux d'identification émis par les porteurs de données, ledit dispositif de séparation de sources comprenant des moyens de filtrage destinés à filtrer lesdits signaux de mélange à l'aide de coefficients de filtrage, des moyens de sommation des signaux de mélange filtrés, des moyens d'adaptation desdits coefficients de filtrage, les moyens de réception comportant plusieurs unités de démodulation placées soit en sortie soit en entrée des moyens de séparation de sources, les moyens de réception délivrant des signaux d'identification estimés pour lesdits porteurs de données à connecter simultanément.

Ainsi la structure du badge (ou du porteur de données dans le cas général) reste inchangée, que le traitement effectué dans la station soit réalisé séquentiellement badge après badge, ou simultanément sur plusieurs badges.

En réponse au signal d'interrogation émis par la station de base, les badges répondent en émettant chacun un signal retour modulé par l'identifieur qui leur est propre. Les signaux mélangés, issus de tous les badges émettant simultanément, sont alors séparés dans la station de base en appliquant une technique de séparation de sources. Des procédures complexes d'interrogations multiples suivies de réponses de confirmation ne sont plus nécessaires. De plus le système est beaucoup plus robuste au bruit ambiant ce qui permet d'accroître les distances de reconnaissance entre la station de base et le badge. De plus, le système peut réduire la consommation d'énergie nécessaire au fonctionnement.

Les liaisons sans fil peuvent être diverses, par exemple des liaisons par infra-rouge, des liaisons par radiofréquences, des liaisons par ultra-sons. A chaque type particulier de liaison sans fil, le système dispose de moyens d'entrée/sortie spécifiques pour l'émission et la réception des signaux échangés. Ainsi, il s'agira d'antennes pour des liaisons par radiofréquences, de transducteurs émetteur/récepteur pour des liaisons par ultra-sons, ou d'émetteurs et de récepteurs de lunmière pour des liaisons par infra-rouge.

Il est possible de disposer le dispositif de séparation de sources soit entre les unités de démodulation et les moyens d'entrée de réception spécifiques à chaque type de liaisons, soit après les unités de démodulation. Dans le premier cas, le dispositif de séparation de sources fournit un signal d'estimation modulé dépendant du signal d'identification du porteur de données. Dans le second cas, le dispositif de séparation de sources fournit directement le signal d'identification estimé.

Différents types de mélanges peuvent ainsi apparaître selon le type de liaisons, selon l'emplacement du dispositif de séparation de sources vis-à-vis des unités de démodulation, et selon le type de modulation utilisée (modulation d'amplitude, modulation de fréquence, modulation de phase). Ces différentes situations peuvent donner naissance en général à des mélanges convolutifs et plus particulièrement à des mélanges linéaires instantanés.

Ainsi dans le cas de liaisons sans fil de type inductives, par exemple une antenne, et dans le cas où le dispositif de séparation de sources est placé après les unités de démodulation, les mélanges de signaux qui arrivent à l'entrée du dispositif de séparation de sources sont des mélanges linéaires instantanés dans le cas de signaux à modulation d'amplitude.

Pour pouvoir séparer les différents types de mélanges qui peuvent apparaître, le dispositif de séparation de sources peut posséder une structure directe, une structure récursive ou une structure mixte combinant une structure partiellement directe et une structure partiellement récursive. Toutes ces structures font intervenir des coefficients de filtrage appliqués aux différents signaux. Le système calcule lui-même les coefficients de filtrage nécessaires pour effectuer la séparation des signaux.

Dans le cas d'une structure récursive, pour identifier simultanément n porteurs de données, le dispositif de séparation de sources comprend n sommateurs récursivement connectés, chaque sommateur ayant:

- une entrée reliée respectivement à un signal de mélange,
- une sortie pour délivrer soit le signal d'identification estimé d'un des porteurs de données, soit un signal d'estimation dépendant du signal d'identification,
- et n-1 entrées reliées chacune respectivement à la sortie d'un des n-1 autres sommateurs à travers respectivement n-1 moyens de filtrage appliquant respectivement au moins un coefficient de filtrage,

ledit dispositif comportant des moyens d'adaptation des coefficients de filtrage pour lui apprendre à fournir les signaux d'identification estimés.

Dans le cas d'une structure directe, pour identifier simultanément n porteurs de données, le dispositif de séparation de sources comprend n sommateurs non récursivement connectés, chaque sommateur ayant:

- n entrées reliées chacune respectivement à un des n signaux de mélange à travers respectivement n moyens de filtrage appliquant respectivement au moins un coefficient de filtrage,
- et une sortie pour délivrer soit le signal d'identification estimé d'un des porteurs de données, soit un signal d'estimation dépendant du signal d'identification,

ledit dispositif comportant des moyens d'adaptation des coefficients de filtrage pour lui apprendre à fournir les signaux d'identification estimés.

Dans le cas d'une structure mixte, pour identifier simultanément n porteurs de données, le dispositif de séparation de sources comprend n sommateurs, chaque sommateur ayant:

- une entrée reliée respectivement à un signal de mélange,
- une sortie pour délivrer soit le signal d'identification estimé d'un des porteurs de données, soit un signal d'estimation dépendant du signal d'identification,
- et n-1 entrées reliées, pour une part, respectivement à la sortie d'une partie des n-1 autres sommateurs, et pour une autre part, respectivement à un des autres signaux de mélange, à travers respectivement n-1 moyens de filtrage appliquant respectivement au moins un coefficient de filtrage,

ledit dispositif comportant des moyens d'adaptation des coefficients de filtrage pour lui apprendre à fournir les signaux d'identification estimés.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent:

Figure 1 : un schéma détaillé d'une partie d'un système connu d'échange de données.

Figure 2 : un schéma d'un système d'échange de données selon l'invention dans lequel le dispositif de séparation de sources est disposé après les unités de démodulation.

Figure 3 : un schéma général d'un système connu d'échange de données.

Figure 4 : un schéma d'un système d'échange de données selon l'invention dans lequel le dispositif de séparation de sources est disposé avant les unités de démodulation.

Figure 5 : un schéma partiel d'un dispositif de séparation de sources à structure récursive.

Figure 6 : un schéma partiel d'un dispositif de séparation de sources à structure directe.

Figure 7 : un schéma partiel d'un dispositif de séparation de sources à structure mixte pour séparer deux signaux de mélanges.

Figure 8 : un schéma partiel généralisant le schéma de la figure 7.

Figure 9 : un schéma d'un moyen de filtrage adaptatif.

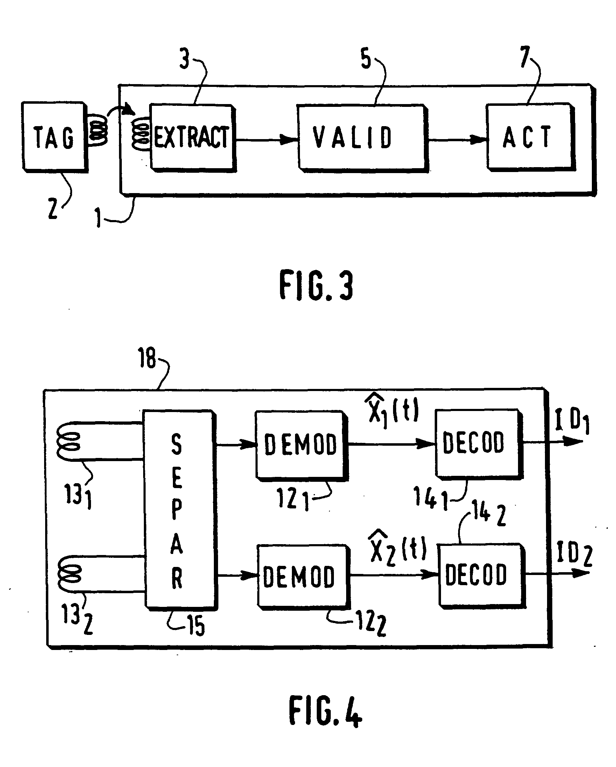

La figure 3 représente un système connu d'échange de données. Il comprend une station de base 1 qui reçoit d'un porteur de données 2, par exemple un badge TAG, un signal d'identification renfermant un identifieur ID. La connexion entre le badge et la station de base s'effectue selon une liaison sans fil à l'aide d'une porteuse modulée par le signal d'identification. La station de base comporte, en série, un module 3 EXTRACT d'extraction de l'identifieur du badge, un module 5 VALID de validation de l'identifieur, et un module actuateur 7 ACT qui réalise une action, par exemple ouvrir un accès à un lieu à accès réservé.

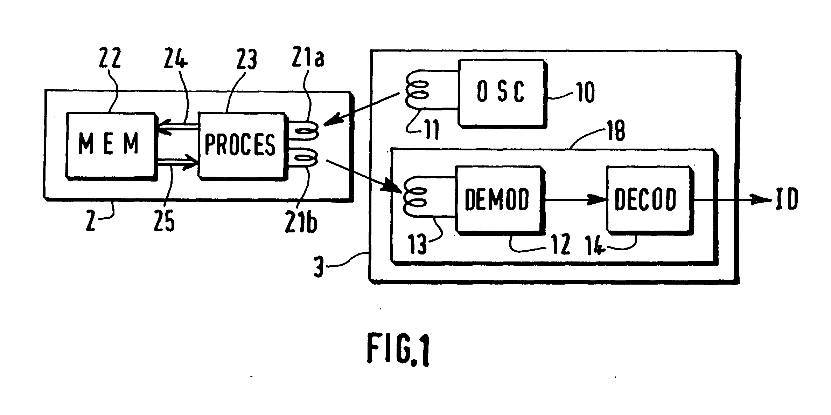

La figure 1 représente une partie d'un système connu d'échange de données. Il comprend le module d'extraction 3 et le badge 2 qui doit être identifié lorsqu'il se trouve dans le champ d'action de la station de base. Le module d'extraction comprend des moyens d'émission comportant un oscillateur 10 muni d'une antenne d'émission 11, par exemple à effet inductif. Le badge 2 comporte une antenne de réception 21a et une antenne d'émission 21b associées à un processeur 23 PROCES qui est relié à des moyens de mémorisation MEM 22 fournissant des données. Ces données sont par exemple un identifieur ID propre au badge. Le module d'extraction comporte également des moyens de réception 18 comportant une antenne de réception 13 associée à une unité de démodulation 12 DEMOD suivie d'une unité de décodage DECOD 14. Le signal modulé, reçu par l'antenne 13 dans la station de base, est démodulé dans l'unité de démodulation 12 qui fournit le signal démodulé à l'unité de décodage 14 qui délivre l'identifieur ID du badge.

La station de base doit identifier l'identifieur ID contenu dans le badge de façon soit à donner à l'individu portant le badge l'autorisation prévue dans ce cas, soit à interdire l'autorisation en cas de non reconnaissance. Il peut s'agir aussi bien d'une reconnaissance d'un objet ou d'un animal entraînant le déclenchement d'actions prévues en pareil cas. Pour cela, l'oscillateur 10 émet à travers l'antenne 11 un signal qui arrive par une liaison sans fil jusqu'à l'antenne de réception 21a du badge, lorsque celui-ci se trouve placé dans le champ d'action de la station de base. Le processeur 23 extrait du signal reçu, par exemple, une cadence d'horloge et différents signaux de contrôle lui permettant de fonctionner et d'adresser la mémoire 22 (connexion 24). Il transforme ensuite le signal reçu en le modulant par l'identifieur ID lu dans la mémoire, pour fournir un signal d'identification X(t) (connexion 25) qui sert à moduler une porteuse qui est émise à l'aide de l'antenne d'émission 21b vers la station de base 1. Les deux antennes 21a et 21b peuvent être fusionnées.

Mais ce mode de fonctionnement ne peut être valable que s'il n'y a qu'un seul badge en communication avec la station de base à un instant donné. En effet, lorsqu'au moins deux badges requièrent simultanément d'être identifiés, le signal d'interrogation émis par l'antenne 11 interroge simultanément tous les badges qui répondent en même temps, ce qui fait que les signaux modulés réémis par les badges arrivent mélangés sur l'antenne 13.

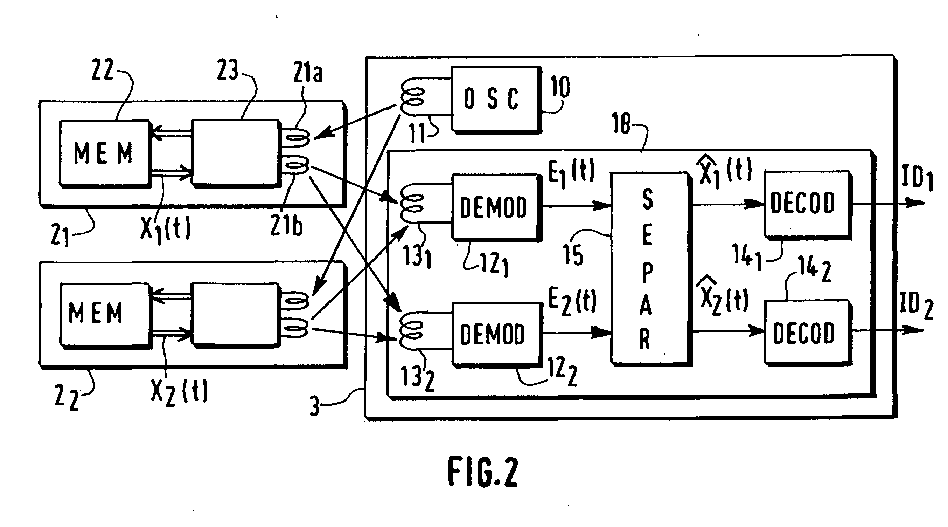

La figure 2 représente le système selon l'invention dans le cas, donné à titre d'exemple, où le dispositif de séparation de sources 15 est placé après les unités de démodulation et en se limitant à deux badges $2_1$, $2_2$ requérant simultanément d'être mis en communication avec la station de base. Les moyens d'extraction 3 comportent deux antennes de réception $13_1$, $13_2$ réunies respectivement à deux unités de démodulation $12_1$, $12_2$. Chaque antenne de réception $13_1$, $13_2$ reçoit des signaux en provenance des deux badges $2_1$, $2_2$ sous la forme de mélanges de deux signaux modulés contenant chacun un signal d'identification $X_1(t)$ ou $X_2(t)$.

Les signaux de mélanges sont démodulés dans les moyens de démodulation $12_1$ et $12_2$ qui fournissent des signaux démodulés $E_1(t)$ et $E_2(t)$ qui sont soumis à l'action du dispositif SEPAR 15 de séparation de sources. Ce dernier délivre des estimations $\hat{X}_1(t)$ et $\hat{X}_2(t)$ des signaux originels $X_1(t)$ et $X_2(t)$ émis par les badges par modulation d'une porteuse. Les signaux estimés $\hat{X}_1(t)$ et $\hat{X}_2(t)$ sont décodés dans les moyens de décodage $14_1$ et $14_2$ pour fournir les

identifieurs $ID_1$ et $ID_2$ des deux badges.

Selon que les mélanges apparus sont des mélanges linéaires instantanés ou des mélanges convolutifs, le filtrage mis en oeuvre dans le dispositif de séparation de sources pourra, dans le cas général, être formé de cellules opérant un filtrage adaptatif, et, dans des cas particuliers, être formé de cellules mettant chacune en oeuvre un seul coefficient de filtrage appelé alors coefficient de séparation. Une combinaison de ces deux types de filtrage est possible, une voie appliquant un filtrage adaptatif à plusieurs coefficients et une autre voie appliquant un seul coefficient de séparation.

Considérons le cas le plus simple où le dispositif de séparation de sources comprend des cellules mettant en oeuvre chacune un coefficient de séparation. La séparation de sources alors effectuée par le dispositif 15 de séparation de sources peut s'écrire sous la forme :

$$(1) \quad \hat{X}_k(t) = \sum_{i=1}^{n} C_{ki}.E_i(t)$$

pour une structure directe, et

$$(2) \quad \hat{X}_k(t) = E_k(t) - \sum_{\substack{i=1 \ i \neq k}}^{n} d_{ki}.\hat{X}_i(t)$$

pour une structure récursive.

Les coefficients $C_{ki}$, $d_{ki}$ sont des coefficients de filtrage dits coefficients de séparation qui sont calculés en temps réel par le dispositif de séparation de sources. Par exemple, pour les coefficients $d_{ki}$, l'adaptation des coefficients peut être réalisée selon l'équation:

$$(3) \qquad d_{ki}(t+1) = d_{ki}(t) + \triangle d_{ki}(t),$$

avec:

$$(4) \qquad \triangle d_{ki}(t) = a.f(\hat{x}_k(t)).g(\hat{x}_i(t)).$$

où f(.) et g(.) sont des fonctions prédéterminées, par exemple:

$$(5) \qquad f(\hat{x}_k(t)) = [\hat{x}_k(t)]^3 \qquad et \qquad g(\hat{x}_i(t)) = \hat{x}_i(t),$$

et où:

$$(6) \qquad \hat{x}(t) = \hat{X}(t) - \langle \hat{X}(t) \rangle,$$

$\langle \hat{X}(t) \rangle$ étant une estimation de l'espérance mathématique de $X(t)$, a étant un gain positif d'adaptation fixe ou variable.

Des équations analogues s'appliquent au cas de l'adaptation des coefficients $C_{ki}$.

L'exemple donné concerne des signaux modulés par modulation d'amplitude. Le cas d'autres modulations, par exemple des modulations de fréquence ou de phase, peut être traité de manière analogue.

La figure 4 représente un autre mode de réalisation des moyens de réception 18. Dans ce cas, le dispositif 15 de séparation de sources est disposé à la sortie des antennes, devant les moyens de démodulation. La séparation porte ainsi sur des signaux de mélanges modulés dépendant de mélanges des signaux d'identification des porteurs de données, la démodulation n'intervenant que lorsque les signaux mélangés ont été séparés.

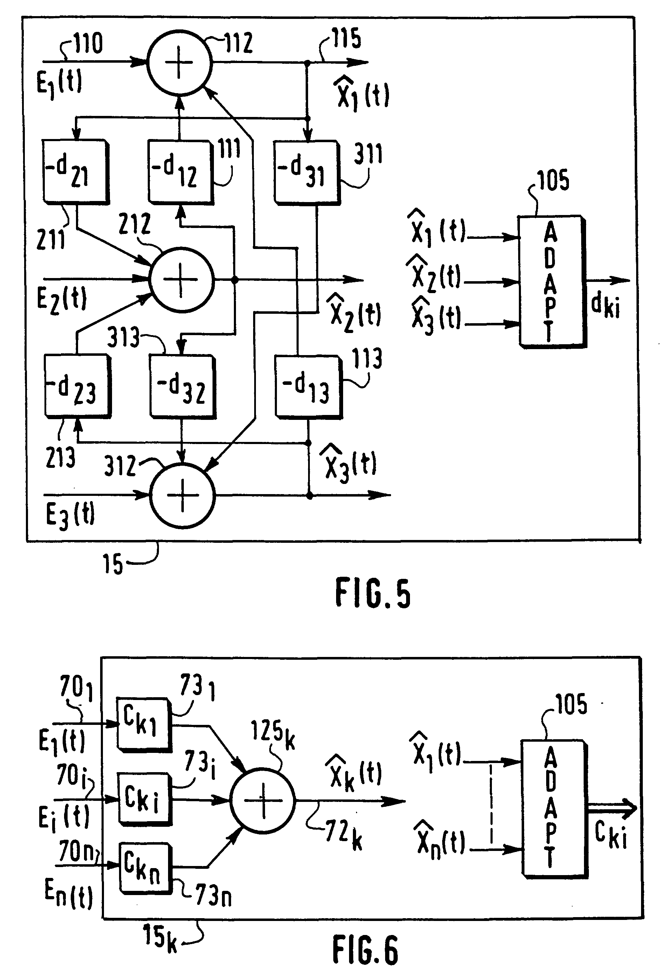

La figure 5 se rapporte, à titre d'exemple, au cas de trois badges pour le mode de réalisation de la figure 2. Elle représente un dispositif de séparation de sources 15 ayant une structure récursive destinée à délivrer trois signaux

d'identification estimés $\hat{X}_1(t)$, $\hat{X}_2(t)$ et $\hat{X}_3(t)$ à partir de trois signaux mélangés $E_1$(t), $E_2$(t) et $E_3$(t). Le dispositif de séparation de sources comporte une pluralité de cellules de multiplication 111, 211, 311, 113, 213, 313 comportant chacune un seul coefficient de séparation. Cette structure comprend un premier sommateur 112 ayant une entrée 110 reliée au signal $E_1$(t) et une sortie 115 qui délivre le signal estimé $\hat{X}_1(t)$. Un second sommateur 212 a une entrée reliée au signal $E_2$(t) et une sortie qui délivre le signal estimé $\hat{X}_2(t)$. Un troisième sommateur 312 a une entrée reliée au signal $E_3$(t) et une sortie qui délivre le signal estimé $\hat{X}_3(t)$. Une seconde entrée du premier sommateur 112 est reliée à la sortie du second sommateur 212 à travers la cellule de multiplication 111 qui pondère le signal de sortie du second sommateur par un coefficient $-d_{12}$. Une troisième entrée du premier sommateur 112 est reliée à la sortie du troisième sommateur 312 à travers la cellule de multiplication 113 qui pondère le signal de sortie du troisième sommateur par un coefficient $-d_{13}$.

De la même manière, une seconde et une troisième entrée du second sommateur 212 sont reliées respectivement à la sortie du premier 112 et du troisième sommateur 312 à travers respectivement les cellules de multiplication 211 et 213 qui pondèrent le signal de sortie du premier et du troisième sommateur par respectivement des coefficients $-d_{21}$ et $-d_{23}$.

De la même manière, le troisième sommateur 312 est réuni aux sorties des autres sommateurs 112 et 212 à travers les cellules de multiplication 311 et 313 qui pondèrent le signal de sortie du premier et du second sommateur par respectivement des coefficients de séparation $-d_{31}$ et $-d_{32}$.

L'adaptation des coefficients de séparation $d_{ki}$ est effectuée dans des moyens d'adaptation ADAPT 105 dans lesquels entrent les signaux estimés $\hat{X}_1(t)$, $\hat{X}_2(t)$ et $\hat{X}_3(t)$. Pour cela, les moyens d'adaptation 105 calculent les coefficients de séparation $d_{ki}$ d'après les équations (3), (4), (5) et (6) déjà décrites.

Les sommateurs et les cellules de multiplication peuvent faire partie d'un calculateur, d'un microprocesseur ou d'une unité de traitement numérique du signal correctement programmé pour réaliser les fonctions décrites.

La figure 6 représente une partie d'une sous-unité de séparation de sources $15_k$ à structure directe destinée à entrer dans la composition d'un dispositif 15 de séparation de sources. Dans le cas où il y a n badges qui émettent simultanément, la sous-unité comprend une pluralité de cellules de multiplication $73_1$ à $73_n$, chacune recevant un signal mélangé $E_1$(t) à $E_n$(t). Chacune de ces cellules de multiplication multiplie le signal par le coefficient de séparation $C_{k1}$ à $C_{kn}$ affecté à l'entrée, avec $1 \leq k \leq n$. Les sorties de toutes les cellules de multiplication $73_1$ à $73_n$ sont reliés à un sommateur $125_k$ pour additionner tous les signaux et délivrer, sur une sortie $72_k$, le signal primaire estimé $\hat{X}_k(t)$. Le dispositif de séparation de sources 15 contient autant de sous-unités partielles $15_k$ qu'il y a de signaux estimés $\hat{X}_k(t)$ à déterminer, c'est-à-dire de badges à traiter simultanément. Comme précédemment, l'adaptation des coefficients de séparation $C_{ki}$ est effectuée dans des moyens d'adaptation ADAPT 105.

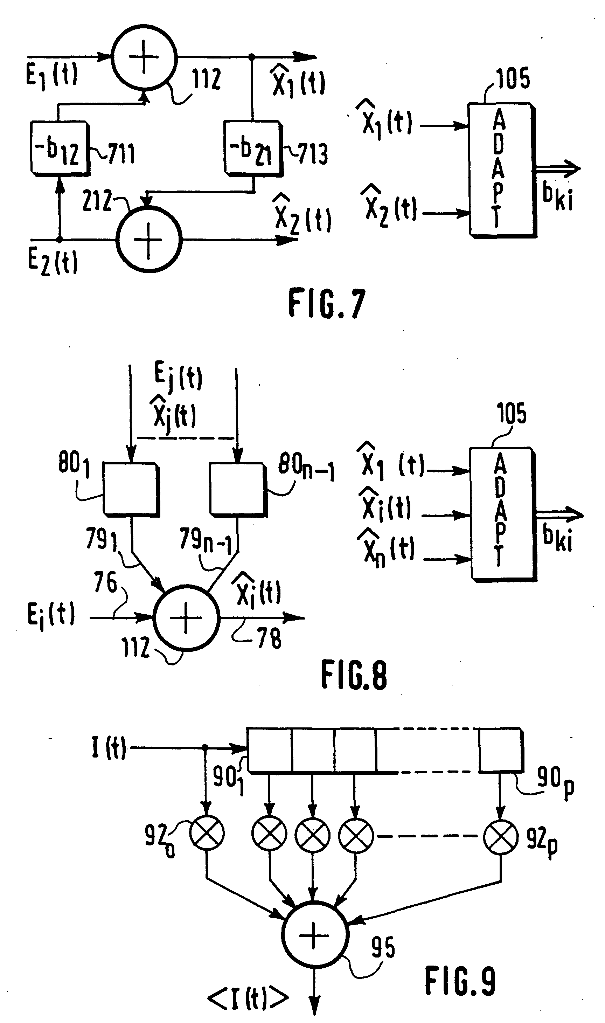

Il est possible de combiner la structure récursive de la figure 5 et la structure directe de la figure 6 pour obtenir une structure mixte. Pour bien faire comprendre la composition d'une telle structure, la figure 7 se rapporte à un exemple simple ne traitant que deux signaux de mélange. Le sommateur 112 reçoit, d'une part, le signal E1(t) et, d'autre part, le signal E2(t) multiplié par un coefficient $-b_{12}$ dans la cellule de multiplication 711. De même, le sommateur 212 reçoit, d'une part, le signal E2(t) et, d'autre part, le signal de sortie $\hat{X}_1(t)$ multiplié par un coefficient $-b_{21}$ dans la cellule de multiplication 713. Les signaux d'identification estimés $\hat{X}1(t)$ et $\hat{X}2(t)$ sont fournis respectivement par les sommateurs 112 et 212. Un sommateur peut donc recevoir, d'une part, directement un des signaux de mélange et, d'autre part, aussi bien zéro, un ou plusieurs autres signaux de mélange E(t) et zéro, un ou plusieurs signaux d'identification estimés, ces derniers signaux étant pondérés respectivement par un coefficient de séparation. Les cas avec zéro autre signal de mélange et avec zéro signal d'identification estimé s'excluent mutuellement. L'adaptation des coefficients $b_{ki}$ est effectuée, comme précédemment, dans des moyens d'adaptation ADAPT 105.

Pour une seule voie de détermination d'un signal d'identification estimé, une structure généralisée est représentée sur la figure 8. Le sommateur 112 reçoit, sur une entrée 76, le signal de mélange Ei(t) auquel correspond le signal d'identification estimé $\hat{X}i(t)$ délivré par la sortie 78. Le sommateur 112 reçoit par ailleurs d'autres signaux de mélanges Ej(t) et/ou des signaux d'identification estimés $\hat{X}j(t)$ sur d'autres entrées $79_1$ à $79_{n-1}$, ces autres signaux étant pondérés par des coefficients de séparation dans les cellules $80_1$ à $80_{n-1}$. L'adaptation des coefficients $b_{ki}$ est effectuée, comme précédemment, dans des moyens d'adaptation ADAPT 105.

Les figures 5, 6, 7, 8 ont été représentées avec des cellules de filtrage formées de cellules de multiplication appliquant chacune un seul coefficient de séparation. Ceci concerne les cas où le dispositif de séparation de sources doit traiter des mélanges linéaires instantanés de signaux. Dans le cas général où ceci ne s'applique pas, les signaux à traiter sont alors des signaux convolutifs. Il est alors nécessaire de remplacer une cellule de filtrage à un seul coefficient de séparation par un cellule de filtrage à plusieurs coefficients de pondération connue sous le nom de cellule de filtrage adaptatif. Par exemple, la cellule de filtrage 211 (cellule de multiplication) de la figure 5 doit être remplacée par la cellule de filtrage adaptatif représentée sur la figure 9. Cette cellule de filtrage adaptatif comporte une batterie de registres à décalage $90_1$ à $90_p$ dont les sorties sont reliées à des moyens de multiplication $92_0$ à $92_p$ dont le rôle est de multiplier le signal présenté sur leur entrée chacune par un coefficient de pondération. Les sorties de tous les moyens de multiplication $92_0$ à $92_p$ sont additionnées dans un moyen de sommation 95 qui délivre une version filtrée <I(t)> du signal I(t) placé en entrée.

On observe qu'une cellule de la figure 5, donc à un seul coefficient de séparation, est un cas particulier de la cellule de la figure 9 dans laquelle on ne conserverait qu'une multiplication par le premier coefficient appliqué par le premier moyen de multiplication $92_0$.

**Revendications**

1. Système d'échange de données comprenant une station de base(1) et au moins un porteur de données ($2_1$, $2_2$) couplés l'un à l'autre à travers des liaisons sans fil pour échanger des données, la station comprenant des moyens d'émission (10,11) et des moyens de réception (18) pour respectivement interroger au moins un porteur de données ($2_1$, $2_2$) et pour recevoir, en réponse, un signal d'identification émis par le porteur de données interrogé, le porteur de données comportant des moyens d'émission ($21_b$)/réception ($21_a$), système dans lequel, pour établir simultanément plusieurs liaisons sans fil entre la station de base $\underline{(1)}$ et plusieurs porteurs de données $\underline{(2_1, 2_2)}$, les moyens de réception (18) de la station comportent un dispositif de séparation de sources (15) pour traiter des signaux de mélanges ($E_1(t)$, $E_2(t)$) dépendant de mélanges des signaux d'identification émis par les porteurs de données, **caractérisé en ce que** ledit dispositif de séparation de sources (15) comprend des moyens de filtrage destinés à filtrer lesdits signaux de mélange à l'aide de coefficients de filtrage, des moyens de sommation des signaux de mélange filtrés, des moyens d'adaptation (105) desdits coefficients de filtrage, les moyens de réception (18) comportant plusieurs unités de démodulation ($12_1$, $12_2$) placées soit en sortie soit en entrée des moyens de séparation de sources (15), les moyens de réception délivrant des signaux d'identification estimés ($X_1(t)$, $X_{2(t)}$) pour lesdits porteurs de données à connecter simultanément.

2. Système selon la revendication 1 **caractérisé en ce que**, pour identifier simultanément n porteurs de données, le dispositif de séparation de sources (15) comprend n sommateurs (112, 212, 312) récursivement connectés, chaque sommateur ayant:

   - une entrée (110) reliée respectivement à un signal de mélange ($E_1(t)$),
   - une sortie (115) pour délivrer soit le signal d'identification estimé ($\hat{X}_1(t)$) d'un des porteurs de données, soit un signal d'estimation dépendant du signal d'identification,
   - et n-1 entrées reliées chacune respectivement à la sortie d'un des n-1 autres sommateurs (212, 312) à travers respectivement n-1 moyens de filtrage appliquant respectivement au moins un coefficient de filtrage ($d_{12}$, $d_{13}$).

3. Système selon la revendication 1 **caractérisé en ce que**, pour identifier simultanément n porteurs de données, le dispositif de séparation de sources (15) comprend n sommateurs ($125_k$) non récursivement connectés, chaque sommateur ayant:

   - n entrées ($70_1$-$70_n$) reliées chacune respectivement à un des n signaux de mélange ($E_1(t)$-$E_n(t)$) à travers respectivement n moyens de filtrage appliquant respectivement au moins un coefficient de filtrage ($Ck_1$-$Ck_n$),
   - et une sortie ($72_k$) pour délivrer soit le signal d'identification estimé ($\hat{X}_k(t)$) d'un des porteurs de données, soit un signal d'estimation dépendant du signal d'identification.

4. Système selon la revendication 1 **caractérisé en ce que**, pour identifier simultanément n porteurs de données, le dispositif de séparation de sources (15) comprend n sommateurs (112, 212), chaque sommateur ayant:

   - une entrée (76) reliée respectivement à un signal de mélange ($E_i(t)$)
   - une sortie (78) pour délivrer soit le signal d'identification estimé ($X_i(t)$) d'un des porteurs de données, soit un signal d'estimation dépendant du signal d'identification,
   - et n-1 entrées reliées ($79_1$-$79_{n-1}$), pour une part, respectivement à la sortie d'une partie des n-1 autres sommateurs ($X_j(t)$), et pour une autre part, respectivement à un des autres signaux de mélange ($E_j(t)$), à travers respectivement n-1 moyens de filtrage ($80_1$-$80_{n-1}$) appliquant respectivement au moins un coefficient de filtrage.

5. Station de base destinée à être couplée par des liaisons sans fil à au moins un porteur de données, la station comprenant des moyens d'émission (10,11) et des moyens de réception (18) pour respectivement interroger le porteur de données et pour recevoir en réponse un signal d'identification émis par le porteur de données interrogé, station dans laquelle, pour établir simultanément plusieurs liaisons sans fil avec plusieurs porteurs de données ($\underline{2_1, 2_2}$), les moyens de réception (18) comportent un dispositif de séparation de sources (15) pour traiter des signaux de mélanges dépendant de mélanges des signaux d'identification émis par les porteurs de données, **caractérisé en ce que** ledit dispositif de séparation de sources comprend des moyens de filtrage destinés à filtrer lesdits signaux de mélange à l'aide de coefficients de filtrage, des moyens de sommation des signaux de mélange filtrés, des moyens d'adaptation (105) desdits coefficients de filtrage, les moyens de réception (18) comportant plusieurs unités de démodulation ($12_1$, $12_2$) placées soit en sortie soit en entrée des moyens de séparation de sources, les moyens de réception délivrant des signaux d'identification estimés pour lesdits porteurs de données à connecter simultanément.

6. Station de base selon la revendication 5 **caractérisée en ce que**, pour identifier simultanément n porteurs de données, le dispositif de séparation de sources (15) comprend n sommateurs récursivement connectés (112, 212, 312), chaque sommateur ayant:

- une entrée (110) reliée respectivement à un signal de mélange ($E_1(t)$),
- une sortie (115) pour délivrer soit le signal d'identification estimé (($X_1(t)$) d'un des porteurs de données, soit un signal d'estimation dépendant du signal d'identification,
- et n-1 entrées (111, 113) reliées chacune respectivement à la sortie d'un des n-1 autres sommateurs (212, 312) à travers respectivement n-1 moyens de filtrage appliquant respectivement au moins un coefficient de filtrage ($d_{12}$, $d_{13}$).

7. Station de base selon la revendication 5 **caractérisée en ce que**, pour identifier simultanément n porteurs de données, le dispositif de séparation de sources ($15_k$) comprend n sommateurs ($125_k$), chaque sommateur ayant:

- n entrées ($73_1$-$73_n$) reliées chacune respectivement à un des n signaux de mélange ($E_1(t)$-$E_n(t)$) à travers respectivement n moyens de filtrage appliquant respectivement au moins un coefficient de filtrage ($Ck_1$-$Ck_n$),
- et une sortie ($72_k$) pour délivrer soit le signal d'identification estimé (($X_k(t)$) d'un des porteurs de données, soit un signal d'estimation dépendant du signal d'identification.

8. Station de base selon la revendication 5 **caractérisée en ce que**, pour identifier simultanément n porteurs de données, le dispositif de séparation de sources comprend n sommateurs non récursivement connectés, chaque sommateur ayant:

- une entrée (76) reliée respectivement à un signal de mélange ($E_i(t)$),
- une sortie (78) pour délivrer soit le signal d'identification estimé ($X_i(t)$) d'un des porteurs de données, soit un signal d'estimation dépendant du signal d'identification,
- et n-1 entrées ($79_1$-$79_{n-1}$) reliées, pour une part, respectivement à la sortie ($\hat{X}_j(t)$) d'une partie des n-1 autres sommateurs, et pour une autre part, respectivement à un des autres signaux de mélange ($E_j(t)$), à travers respectivement n-1 moyens de filtrage ($80_1$-$80_{n-1}$) appliquant respectivement au moins un coefficient de filtrage.

## Patentansprüche

1. Datenauswechselsystem mit einer Basisstation (1) und mindestens einem Datenträger {$2_1$, $2_2$), miteinander über eine schnurlose Verbindung verbunden, um Daten auszutauschen, wobei die Station Sendemittel (10,11) und Empfangsmittel (18) enthält, um respektive mindestens einen Datenträger ($2_1$, $2_2$) abzufragen und um in Reaktion ein Identifikationssignal zu erhalten, das vom befragten Datenträger gesendet wurde, wobei der Datenträger Mittel zum Senden (21b)/Empfangen (21a) enthält, System, in dem für den gleichzeitigen Aufbau mehrerer schnurlosen Verbindungen zwischen der Basisstation (1) und mehreren Datenträgern ($2_1$, $2_2$) die Empfangsmittel (18) der Station eine Vorrichtung zur Trennung der Quellen (15) enthalten, um die Mischsignale ($E_1(t)$, $E_2(t)$) zu verarbeiten, die von Mischungen der von den Datenträgern gesendeten Identifikationssignalen abhängen, **dadurch gekennzeichnet, dass** die besagte Vorrichtung zur Trennung von Quellen (15) Filtermittel enthält, die dafür bestimmt sind, die besagten Mischsignale mit Hilfe von Filterkoeffizienten zu filtern, Mittel für die Addition der gefilterten Mischsignale, Adaptionsmittel (105) der besagten Filterkoeffizienten, die Empfangsmittel (18), die mehrere Demodulationeinheiten ($12_1$, $12_2$) enthalten, die entweder am Ausgang oder am Eingang der Mittel zur Trennung von Quellen (15) angeordnet sind, und die Empfangsmittel bewertete Identifikationssignale ($\hat{X}_1(t)$, $\hat{X}_2(t)$) für die besagten gleichzeitig anzuschließenden Datenträger ausgeben.

2. System nach Anspruch 1, **dadurch gekennzeichnet, dass** zur gleichzeitigen Identifikation von n Datenträgern die Vorrichtung zur Trennung von Quellen (15) n rekursiv geschaltete Summierer (112, 212, 312) enthält, und jeder Summierer hat:

- einen Eingang (110), respektive mit einem Mischsignal ($E_1(t)$) verbunden,
- eine Ausgang (115) für die Ausgabe entweder des bewerteten Identifikationssignals ($\hat{X}_1(t)$) von einem der Datenträger oder eines Bewertungssignals, das von einem Identifikationssignal abhängt,
- und n-1 Eingänge, jeweils respektive mit dem Ausgang einer der n-1 anderen Summierer (212, 312) über respektive n-1 Filtermittel verbunden, die respektive mindestens einen Filterkoeffizienten anwenden ($d_{12}$, $d_{13}$).

3. System nach Anspruch 1, **dadurch gekennzeichnet, dass** zur gleichzeitigen Identifikation von n Datenträgern die Vorrichtung zur Trennung von Quellen (15) n nicht rekursiv geschaltete Summierer ($125_k$) enthält, und jeder Summierer hat:

- n Eingänge ($70_1$-$70_n$), jeweils respektive mit einem der n Mischsignale ($E_1(t)$-$E_n(t)$) über respektive n Filtermittel verbunden, die respektive mindestens einen Filterkoeffizienten ($Ck_1$-$Ck_n$) anwenden,
- und eine Ausgang ($72_k$) für die Ausgabe entweder des bewerteten Identifikationssignals ($\hat{X}_k(t)$) von einem der Datenträger oder eines Bewertungssignals, das von einem Identifikationssignal abhängt.

4. System nach Anspruch 1, **dadurch gekennzeichnet, dass** zur gleichzeitigen Identifikation von n Datenträgern die Vorrichtung zur Trennung von Quellen (15) n Summierer (112, 212) enthält, und jeder Summierer hat:

- einen Eingang (76) respektive mit einem Mischsignal ($E_i(t)$) verbunden,
- eine Ausgang (78) für die Ausgabe entweder des bewerteten Identifikationssignals ($\hat{X}_i(t)$) von einem der Datenträger oder eines Bewertungssignals, das von einem Identifikationssignal abhängt,
- und n-1 Eingänge ($79_1$-$79_{n-1}$), einerseits respektive mit dem Ausgang eines Teils der n-1 anderen Summierer ($\hat{X}_j(t)$) und andererseits respektive mit einem der anderen Mischsignale ($E_j(t)$) über respektive n-1 Filtermittel ($80_1$-$80_{n-1}$) verbunden, die respektive mindestens einen Filterkoeffizienten anwenden.

5. Basisstation, dafür bestimmt, über eine schnurlose Verbindungen an mindestens einen Datenträger gekoppelt zu werden, wobei die Station Sendemittel (10,11) und Empfangsmittel (18) enthält, um respektive mindestens einen Datenträger abzufragen und um in Reaktion ein Identifikationssignal zu erhalten, das vom befragten Datenträger gesendet wurde, Station, in der für den gleichzeitigen Aufbau mehrerer schnurlosen Verbindungen zwischen der Basisstation (1) und mehreren Datenträgern ($2_1$, $2_2$) die Empfangsmittel (18) der Station eine Vorrichtung zur Trennung der Quellen (15) enthalten, um die Mischsignale zu verarbeiten, die von Mischungen der von den Datenträgern gesendeten Identifikationssignalen abhängen, **dadurch gekennzeichnet, dass** die besagte Vorrichtung zur Trennung von Quellen Filtermittel enthält, die dafür bestimmt sind, die besagten Mischsignale mit Hilfe von Filterkoeffizienten zu filtern, Mittel für die Addition der gefilterten Mischsignale, Adaptionsmittel (105) der besagten Filterkoeffizienten, die Empfangsmittel (18), die mehrere Demodulationeinheiten ($12_1$, $12_2$) enthalten, die entweder am Ausgang oder am Eingang der Mittel zur Trennung von Quellen (15) angeordnet sind, und die Empfangsmittel bewertete Identifikationssignale für die besagten gleichzeitig anzuschließenden Datenträger ausgeben.

6. Basisstation nach Anspruch 5, **dadurch gekennzeichnet, dass** zur gleichzeitigen Identifikation von n Datenträgern die Vorrichtung zur Trennung von Quellen (15) n rekursiv geschaltete Summierer (112, 212, 312) enthält, und jeder Summierer hat:

- einen Eingang (110), respektive mit einem Mischsignal ($E_1(t)$) verbunden,
- eine Ausgang (115) für die Ausgabe entweder des bewerteten Identifikationssignals ($\hat{X}_1(t)$) von einem der Datenträger oder eines Bewertungssignals, das von einem Identifikationssignal abhängt,
- und n-1 Eingänge (111, 113), jeweils respektive mit dem Ausgang einer der n-1 anderen Summierer (212, 312) über respektive n-1 Filtermittel verbunden, die respektive mindestens einen Filterkoeffizienten anwenden ($d_{12}$, $d_{13}$).

7. Basisstation nach Anspruch 5, **dadurch gekennzeichnet, dass** zur gleichzeitigen Identifikation von n Datenträgern die Vorrichtung zur Trennung von Quellen ($15_k$) n nicht rekursiv geschaltete Summierer ($125_k$) enthält, und jeder Summierer hat:

- n Eingänge ($73_1$-$73_n$), jeweils respektive mit einem der n Mischsignale ($E_1(t)$-$E_n(t)$) über respektive n Filtermittel verbunden, die respektive mindestens einen Filterkoeffizienten ($Ck_1$-$Ck_n$) anwenden, $\wedge$
- und eine Ausgang ($72_k$) für die Ausgabe entweder des bewerteten Identifikationssignals ($X_k(t)$) von einem der Datenträger oder eines Bewertungssignals, das von einem Identifikationssignal abhängt.

**8.** Basisstation nach Anspruch 5, **dadurch gekennzeichnet, dass** zur gleichzeitigen Identifikation von n Datenträgern die Vorrichtung zur Trennung von Quellen n nicht rekursiv geschaltete Summierer enthält, und jeder Summierer hat:

- einen Eingang (76) respektive mit einem Mischsignal ($E_i(t)$) verbunden, $\wedge$
- eine Ausgang (78) für die Ausgabe entweder des bewerteten Identifikationssignals ($X_i(t)$) von einem der Datenträger oder eines Bewertungssignals, das von einem Identifikationssignal abhängt,
- und n-1 Eingänge ($79_1$-$79_{n-1}$), einerseits respektive mit dem Ausgang eines Teils der n-1 anderen Summierer ($X_j(t)$) und andererseits respektive mit einem der anderen Mischsignale ($E_j(t)$) über respektive n-1 Filtermittel ($80_1$-$80_{n-1}$) verbunden, die respektive mindestens einen Filterkoeffizienten anwenden.


## Claims

**1.** A data exchange system, including a base station (1) and at least one data carrier ($2_1$, $2_2$) which are coupled to one another via wireless links in order to exchange data, the station including transmitter means (10, 11) and receiver means (18) for interrogating at least one data carrier ($2_1$, $2_2$) and for receiving, in response thereto, an identification signal transmitted by the interrogated data carrier, the data carrier including transmitter ($21_b$) / receiver ($21_a$) means, in which system, in order to establish a plurality of wireless links simultaneously between the base station (1) and several data carriers ($2_1$, $2_2$), the receiver means (18) of the station include a source separation device (15) for processing mixed signals ($E_1(t)$, $E_2(t)$) dependent on mixtures of identification signals transmitted by the data carriers, **characterized in that** said source separation device (15) comprises filtering means designed to filter said mixed signals by means of filtering coefficients, summing means for the filtered mixed signals, and adaptation means (105) for adapting said filtering coefficients, the receiver means (18) including several demodulation units ($12_1$, $12_2$) which are connected either to the output or to the input of the source separation means (15), the receiver means delivering estimated identification signals ($X1(t)$,$X2(t)$ for said data carriers to be simultaneously connected.

**2.** A system as claimed in claim 1, **characterized in that** the source separation device (15) includes n recursively connected summing devices (112, 212, 312) for the simultaneous identification of n data carriers, each summing device having:

- an input (110) for receiving a respective signal mixture ($E_1(t)$), $\wedge$
- an output (115) for delivering either the estimated identification signal ($X_1(t)$) of one of the data carriers or an estimation signal which is dependent on the identification signal,
- and n-1 inputs, each of which is connected to a respective output of one of the n-1 other summing devices (212, 312) via n-1 filtering means applying at least one respective filtering coefficient ($d_{12}$, $d_{13}$).

**3.** A system as claimed in claim 1, **characterized in that** the source separation device (15) comprises n summing devices ($125_k$) which are not recursively connected for the simultaneous identification of n data carriers, each summing device having:

- n inputs ($70_1$ - $70_n$), each of which receives a respective one of the n signal mixtures ($E_1(t)$, $E_n(t)$) via n filtering means applying at least one respective filtering coefficient ($Ck_1$ - $Ck_n$), $\wedge$
- and an output ($72_k$) for delivering either the estimated identification signal ($X_k(t)$) of one of the data carriers or an estimation signal which is dependent on the identification signal.

**4.** A system as claimed in claim 1, **characterized in that** the source separation device (15) comprises n summing devices (112, 212) for the simultaneous identification of n data carriers, each summing device having:

- an input (76) for receiving a respective signal mixture ($E_i(t)$), $\wedge$
- an output (78) for delivering either the estimated identification signal ($Xi(t)$) of one of the data carriers or an estimation signal which is dependent on the identification signal,
- and n-1 inputs ($79_1$ - $79_{n-1}$) which are connected partly to the output of part of the n-1 other summing devices

($\hat{Xj}(t)$) and partly to one of the other signal mixtures ($E_j(t)$), via n-1 filtering means ($80_1$ - $80_{n-1}$) applying at least one respective filtering coefficient.

5. A base station designed to be coupled to at least one data carrier via wireless links, the station including transmitter means (10, 11) and receiver means (18) for interrogating the data carrier and for receiving, in response thereto, an identification signal transmitted by the interrogated data carrier, in which station, in order to establish a plurality of wireless links simultaneously with several data carriers ($2_1$, $2_2$), the receiver means (18) comprise a source separation device (15) for processing mixed signals dependent on mixtures of identification signals transmitted by the data carriers, **characterized in that** said source separation device comprises filtering means designed to filter said mixed signals by means of filtering coefficients, summing means for the filtered mixed signals, and adaptation means (105) for adapting said filtering coefficients, the receiver means (18) including several demodulation units ($12_1$, $12_2$) which are connected either to the output or to the input of the source separation means, the receiver means delivering estimated identification signals for said data carriers to be simultaneously connected.

6. A base station as claimed in Claim 5, **characterized in that** for the simultaneous identification of n data carriers the source separation device (15) includes n recursively connected summing devices (112, 212, 312), each summing device having:

- an input (110) for receiving a respective signal mixture ($E_1(t)$),
- an output (115) for delivering either the estimated identification signal (($\hat{X}1(t)$) of one of the data carriers or an estimation signal which is dependent on the identification signal,
- and n-1 inputs (111, 113), each of which is connected to a respective output of one of the n-1 other summing devices (212, 312) via n-1 filtering means applying at least one respective filtering coefficient ($d_{12}$, $d_{13}$).

7. A base station as claimed in Claim 5, **characterized in that** the source separation device ($15_k$) comprises n summing devices ($125_k$) which are not recursively connected for the simultaneous identification of n data carriers, each summing device having:

- n inputs ($73_1$ - $73_n$), each of which receives a respective one of the n mixed signals ($E_1(t)$ - ($E_n(t)$) via n filtering means applying at least one respective filtering coefficient ($Ck_1$ - $Ck_n$),
- and an output ($72_k$) for delivering either the estimated identification signal (($\hat{X}k(t)$) of one of the data carriers or an estimation signal which is dependent on the identification signal.

8. A base station as claimed in Claim 5, **characterized in that** the source separation device comprises n summing devices which are not recursively connected for the simultaneous identification of n data carriers, each summing device having:

- an input (76) for receiving a respective signal mixture ($E_i(t)$),
- an output (78) for delivering either the estimated identification signal ($\hat{X}i(t)$) of one of the data carriers or an estimation signal which is dependent on the identification signal,
- and n-1 inputs ($79_1$ - $79_{n-1}$) which are connected partly to the output ($\hat{Xj}(t)$) of part of the n-1 other summing devices and partly to one of the other signal mixtures ($E_j(t)$), via n-1 filtering means ($80_1$ - $80_{n-1}$) applying at least one respective filtering coefficient.

FIG.1

EP 0 762 310 B1

FIG.2

EP 0 762 310 B1

FIG. 3

FIG. 4

EP 0 762 310 B1

FIG.5

FIG.6

**FIG.7**

**FIG.8**

**FIG.9**